Europäisches Patentamt

European Patent Office

Office européen des brevets

(19)

(11) Veröffentlichungsnummer: **0 193 775 B1**

(12) **EUROPÄISCHE PATENTSCHRIFT**

(45) Veröffentlichungstag der Patentschrift:
04.01.89

(51) Int. Cl.⁴: **H02M 7/757, H02M 7/00**

(21) Anmeldenummer: 86101993.3

(22) Anmeldetag: **17.02.86**

(54) **Verfahren zur Regelung der Zwischenkreisspannung bei einem Spannungszwischenkreisumrichter und Vorrichtung zur Durchführung des Verfahrens.**

(30) Priorität: **01.03.85 DE 3507298**

(43) Veröffentlichungstag der Anmeldung:
**10.09.86 Patentblatt 86/37**

(45) Bekanntmachung des Hinweises auf die Patenterteilung:
**04.01.89 Patentblatt 89/1**

(84) Benannte Vertragsstaaten:
**AT DE FR GB IT**

(56) Entgegenhaltungen:
**EP-A- 0 122 227**
**US-A- 4 375 612**

**PATENTS ABSTRACTS OF JAPAN, Band 8, Nr. 17,**
**(E-223) [1454], 25. Januar 1984; & JP - A**
**- 58 179 164 (MITSUBISHI DENKI K.K.) 20-10-1983**

(73) Patentinhaber: **Siemens Aktiengesellschaft Berlin und München, Wittelsbacherplatz 2, D-8000 München 2(DE)**

(72) Erfinder: **Schneider, Hans-Peter, Dipl.-Ing., Bodenfeld 14, D-8551 Gremsdorf(DE)**

## Beschreibung

Die Erfindung betrifft ein Verfahren zur Regelung der Zwischenkreisspannung bei einem Spannungszwischenkreisumrichter, der aus einem Gleichrichter, einem Wechselrichter und einer zwischen einer Glättungsdrossel und einem Glättungskondensator angeordneten Rückspeiseschaltung aufgebaut ist, bei der in jeder Stromschiene des Zwischenkreises eine in Durchlaßrichtung geschaltete Diode vorgesehen ist, wobei jeweils die Kathoden und die Anoden der Dioden mittels steuerbarer Stromrichterventile miteinander verbunden sind und eine Vorrichtung zur Durchführung des Verfahrens.

Ein derartig aufgebauter Spannungszwischenkreisumrichter ist aus der DE-A 3 034 501 bekannt. Zur Regelung der Zwischenkreisspannung bei Energiezufuhr zur Last werden die Thyristoren des Gleichrichters mittels eines Spannungsreglers und einer Treiberstufe geregelt, wobei eine Sollwertspannung mit dem Istwert der Zwischenkreisspannung verglichen wird und ein erzeugtes Fehlersignal die Führungsgröße des Gleichrichters bildet. Die maximale erreichbare Zwischenkreisspannung ist gleich der Gleichspannung eines ungesteuerten Gleichrichters. Damit die im Verbraucher erzeugte Leistung zum Netz zurückgeführt werden kann, werden die steuerbaren Stromrichterventile der Rückspeiseschaltung mittels einer Treiberstufe und des Spannungsreglers gesteuert. Der Spannungsregler ermittelt über die Zwischenkreisspannung, in welcher Richtung die Energie transportiert wird. Die Stromamplitude des ins Netz fließenden Stromes wird durch den steuerbaren Gleichrichter bestimmt. Bei Energierückführung ins Netz muß die erhöhte Zwischenkreisspannung verringert werden. Dabei kann es vorkommen, daß der gesteuerte Gleichrichter kippt, d.h. der gesteuerte Gleichrichter kann nicht mehr über das Netz kommutieren. Dies ist auch als Wechselrichterkippen bekannt.

Der Erfindung liegt nun die Aufgabe zugrunde, ein Verfahren zur Regelung der Zwischenkreisspannung für den eingangs genannten Spannungszwischenkreisumrichter anzugeben, wobei nur die steuerbaren Stromrichterventile der Rückspeiseschaltung für beide Energierichtungen, d.h. Energiezufuhr zur Last und Energierückführung ins Netz, geregelt werden.

Diese Aufgabe wird erfindungsgemäß gelöst mit dem kennzeichnenden Merkmal des Anspruchs 1.

Beim erfindungsgemäßen Verfahren wird für beide Energierichtungen jedes steuerbare Stromrichterventil der Rückspeiseschaltung jeweils mit einer pulsbreitenmodulierten Pulsfolge angesteuert. Mit diesen beiden verschiedenen Pulsfolgen für jedes steuerbare Stromrichterventil kann man die Zwischenkreisspannung über den maximal erreichbaren Gleichspannungswert eines ungeregelten Gleichrichters erhöhen und die Energierückspeisung ins Netz, d.h. den zurückfließenden Strom regeln, ohne daß der Gleichrichter kippt.

Zur Erhöhung der Zwischenkreisspannung werden die beiden steuerbaren Stromrichterventile der Rückspeiseschaltung jeweils mit einer Pulsfolge angesteuert, die derart zeitlich zueinander versetzt sind, daß zwischen den Einschaltzeiten beide steuerbare Stromrichterventile gesperrt sind. In dieser Sperrzeit kann der über die Glättungsdrossel aufgebaute Strom als Ladestrom in den Glättungskondensator fließen. Durch die Pulsbreite der Pulsfolge wird der Ladestrom bestimmt und somit der Mittelwert der Zwischenkreisspannung. Dabei bleibt der Steuerwinkel des Gleichrichters konstant. Der Steuerwinkel kann jeden beliebigen Wert zwischen 0° el und 90° el annehmen. Mit Hilfe dieser Regelung erhält man immer eine höhere Zwischenkreisspannung bezogen auf die sich einstellende Gleichspannung beim selben Steuerwinkel. Die maximal der Last zugeführte Energie erhält man mit dieser Regelung, wenn der Gleichrichter im ungesteuerten Gleichrichterbetrieb angesteuert wird.

Zur Energierückspeisung ins Netz wird der Gleichrichter in den Wechselrichterbetrieb gesteuert, wobei der Steuerwinkel, während der Energierückspeisung, konstant gehalten wird. Die Einschaltzeiten der beiden Pulsfolgen für die steuerbaren Stromrichterventile der Rückspeiseschaltung sind zeitlich so zueinander versetzt, daß die Einschaltzeiten sich zeitlich überlappen. Durch die veränderliche Pulsbreite der beiden Pulsfolgen wird der Überlappungszeitbereich verändert und somit der Stromanstieg des rückfließenden Stromes in den Stromschienen des Zwischenkreises.

Zur Zwangskommutierung der Thyristoren des Gleichrichters bei Energierückspeisung ins Netz werden die beiden Pulsfolgen für die steuerbaren Stromrichterventile für eine Zeitspanne unterbrochen, d.h. die steuerbaren Stromrichterventile werden gesperrt. Die Zeitspanne entspricht der Freiwerdezeit der Thyristoren des Gleichrichters. Dadurch kommutieren die Thyristoren bei einem Stromwert gleich Null. Somit können an den Thyristoren die Überspannungen vermieden und eine RC-Beschaltung der Thyristoren eingespart werden.

Zur weiteren Erläuterung der Erfindung wird auf die Zeichnung Bezug genommen, in der ein Ausführungsbeispiel einer Anordnung zur Durchführung des Verfahrens nach der Erfindung schematisch veranschaulicht ist.

Figur 1 zeigt einen erfindungsgemäßen Spannungszwischenkreisumrichter mit einer Spannungsregelung mit unterlagerter Stromregelung, in

Figur 2 ist der zeitliche Verlauf einer Hilfsspannung und einer Steuerspannung dargestellt und in den

Figuren 3 und 4 sind die pulsbreitenmodulierbaren Pulsfolgen für die steuerbaren Stromrichterventile der Rückspeiseschaltung zur Erhöhung der Zwischenkreisspannung veranschaulicht,

Figuren 5 und 6 zeigen die pulsbreitenmodulierbaren Pulsfolgen für die steuerbaren Stromrichterventile der Rückspeiseschaltung zur Energierückspeisung ins Netz.

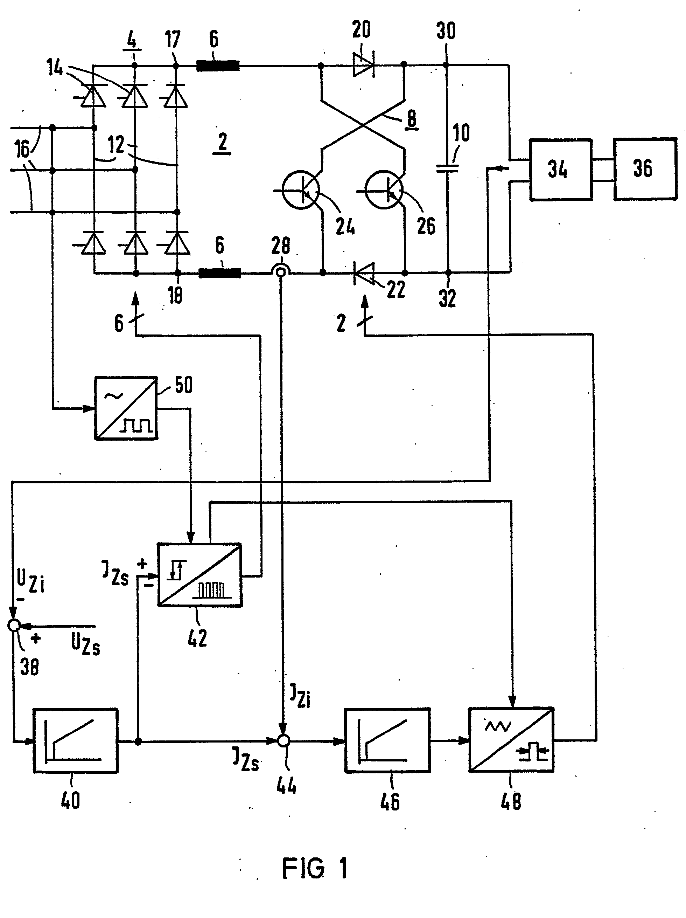

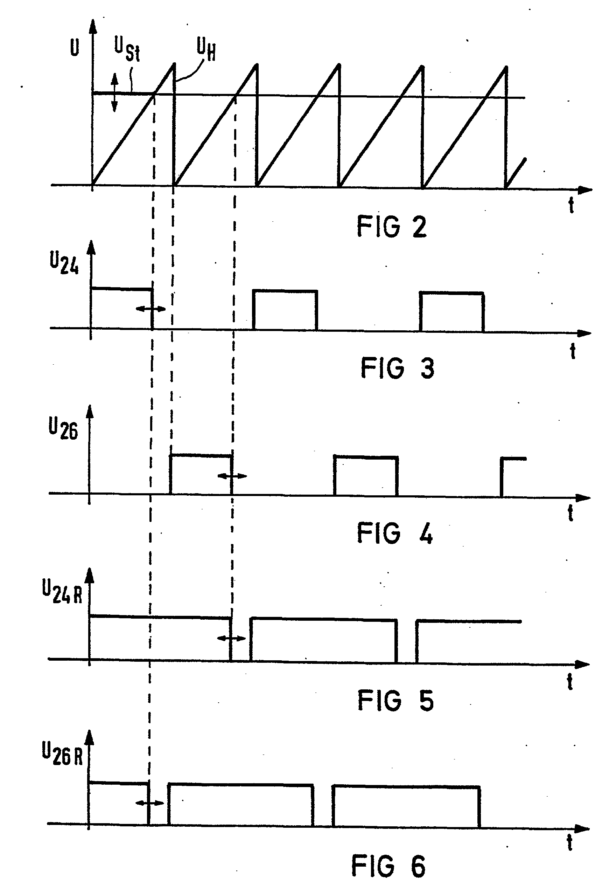

In der Figur 1 ist ein erfindungsgemäßer Spannungszwischenkreisumrichter 2 mit einer Spannungsregelung mit unterlagerter Stromregelung dargestellt. Der Spannungszwischenkreisumrichter 2 ist aus einem Gleichrichter 4, zwei Glättungsdrosseln 6, einer Rückspeiseschaltung 8 und einem Glättungskondensator 10 aufgebaut. Bei symmetrischer Aufteilung der Glättungsdrosseln 6 in beiden Stromschienen des Zwischenkreises erhält man eine wesentlich verminderte Funkstörung und eine verbesserte elektromagnetische Verträglichkeit EMV, die aufgrund von schnellen Potentialverschiebungen durch die steuerbaren Stromrichterventile der Rückspeiseschaltung 8 entstehen. Als Gleichrichter 4 ist eine dreiphasige Brückenschaltung vorgesehen, deren Brückenzweige 12 jeweils mit Thyristoren 14 versehen sind. Die Brückenzweige 12 werden über Stromschienen 16 gespeist. Die Ausgangsklemmen 17 und 18 des Gleichrichters 4 sind jeweils mit einer Glättungsdrossel 6 verbunden. Bei der zwischen den Glättungsdrosseln 6 und dem Glättungskondensator 10 angeordneten Rückspeiseschaltung 8 ist in jeder Stromschiene des Zwischenkreises eine in Durchlaßrichtung geschaltete Diode 20 und 22 vorgesehen. Die Kathode und die Anode der Diode 20 ist jeweils mittels eines steuerbaren Stromrichterventils 24 und 26 mit der Kathode und Anode der Diode 22 verbunden. Als steuerbare Stromrichterventile 24 und 26 sind im Ausführungsbeispiel Transistoren vorgesehen. Außerdem ist zwischen der Diode 22 und der Glättungsdrossel 6 ein Stromfühler 28 angeordnet. Die Ausgangsklemmen 30 und 32 des Zwischenkreises sind mit einem Wechselrichter 34 verbunden, dessen Ausgang mit einer Last 36, beispielsweise einem Asynchronmotor, verbunden ist. Den Istwert $U_{Zi}$ der Zwischenkreisspannung, den man an den Ausgangsklemmen 30 und 32 mißt, wird einem ersten Summierpunkt 38 zugeführt. Außerdem wird diesem ersten Summierpunkt 38 eine Sollwertspannung $U_{Zs}$ der Zwischenkreisspannung zugeführt. Am Ausgang des ersten Summierpunktes 38 erhält man die Differenzspannung von Sollwert $U_{Zs}$ und Istwert $U_{Zi}$ der Zwischenkreisspannung. Dieser Ausgang ist mit einem Eingang eines Spannungsreglers 40 verbunden, an dessen Ausgang ein Stromsollwert $I_{Zs}$ ansteht. Der Ausgang des Spannungsreglers 40 ist mit einem Eingang einer Umschaltstufe 42 und einem zweiten Summierpunkt 44 verbunden. Diesem zweiten Summierpunkt 44 wird außerdem der Stromistwert $I_{Zi}$ des Zwischenkreises, der mit Hilfe des Stromfühlers 28 gemessen wird, zugeführt. Der Ausgang des zweiten Summierpunktes 44 ist mit einem Stromregler 46, dessen Ausgang mit einem Steuersatz 48 für die steuerbaren Stromrichterventile 24 und 26 verbunden sind. Ein Steuersatz 50 für den Gleichrichter 4 ist mit der Umschaltstufe 42 verbunden. Ein Ausgang der Umschaltstufe 42 ist mit dem Steuersatz 48 für die steuerbaren Stromrichterventile 24 und 26 und ein anderer Ausgang ist mit den Thyristoren 14 des Gleichrichters 4 verbunden. Als Spannungsregler 40 und Stromregler 46 sind jeweils ein Regler mit einem proportionalen, integrierenden Verhalten vorgesehen. Der Steuersatz 48 für die steuerbaren Stromrichterventile 24 und 26 enthält eine Schaltung zur Erzeugung pulsbreitenmodulierter Pulsfolgen, d.h. eine Hilfssteuerspannung $U_H$, beispielsweise eine Sägezahnspannung, und eine regelbare Steuerspannung $U_{St}$, beispielsweise eine Gleichspannung, werden wie in Figur 2 überlagert. Die Umschaltstufe 42 erkennt aus dem Vorzeichen des Stromsollwertes $I_{Zs}$ die Stromrichtung im Zwischenkreis des Spannungszwischenkreisumrichters 2 und damit, ob Energie der Last oder Energie von der Last dem Netz zugeführt werden soll. Dementsprechend wird von der Umschaltstufe 42 der Steuersatz 48 für die steuerbaren Stromrichterventile 24 und 26 gesteuert.

In der Figur 2 ist ein Diagramm dargestellt, in dem die Hilfssteuerspannung $U_H$ und die Steuerspannung $U_{St}$ über der Zeit t aufgetragen ist. Als Hilfssteuerspannung $U_H$ ist eine Sägezahnspannung und als Steuerspannung $U_{St}$ ist eine steuerbare Gleichspannung vorgesehen.

In den Figuren 3 und 4 sind die pulsbreitenmodulierten Pulsfolgen $U_{24}$ und $U_{26}$ für die steuerbaren Stromrichterventile 24 und 26 der Rückspeiseschaltung 8 über der Zeit t dargestellt. Die beiden Pulsfolgen $U_{24}$ und $U_{26}$ sind zeitlich derart zueinander versetzt, daß zwischen den Einschaltzeiten beide steuerbaren Stromrichterventile 24 und 26 gesperrt sind. Mit Hilfe dieses Pulspausenverhältnisses regelt man den über den Glättungsdrosseln 6 aufgebauten Strom, der als Ladestrom in den Glättungskondensator 10 fließt. Damit wird der Zwischenkreisspannungswert über den Gleichspannungswert eines ungesteuerten Gleichrichters erhöht, wobei beispielsweise der Gleichrichter im ungesteuerten Gleichrichterbetrieb angesteuert wird. Somit erhält man am Wechselrichter 34 bzw. an der Last 36 eine erhöhte Leistungsabgabe, ohne dabei die Netzspannung erhöhen zu müssen. Es können somit bei einem beispielsweise 380-Volt-Netz eine Zwischenkreisspannung $U_{Zi}$ von beispielsweise 600 Volt erreicht werden, wodurch der Last eine wesentlich höhere Energie zugeführt wird. Diese Energieerhöhung beträgt beispielsweise 20%.

In den Figuren 5 und 6 sind ebenfalls pulsbreitenmodulierte Pulsfolgen $U_{24R}$ und $U_{26R}$ für die steuerbaren Stromrichterventile 24 und 26 der Rückspeiseschaltung 8 über die Zeit t dargestellt. Mit diesen Pulsfolgen werden die steuerbaren Stromrichterventile 24 und 26 gesteuert, wenn Energie von der Last 36 ins Netz zurückgespeist werden soll. Dazu wird der Gleichrichter 4 in den Wechselrichterbetrieb gesteuert, wobei der Steuerwinkel während der Energierückspeisung konstant, beispielsweise 150° el, gehalten wird. Der Strom von der Last 36 fließt beispielsweise von der Ausgangsklemme 30 des Zwischenkreises über das gesteuerte Stromrichterventil 24 und einem Brückenzweig 12 des Gleichrichters 4 ins Netz und über einen anderen Brückenzweig 12 des Gleichrichters 4 und dem gesteuerten Stromrichterventil 26 und der Ausgangsklemme 32 zur Last 36 zurück. Die Einschaltzeiten der beiden Pulsfolgen $U_{24R}$ und $U_{26R}$ für die steuerbaren Stromrichterventile 24 und 26 sind zeitlich so zueinander versetzt, daß die Einschaltzeiten sich zeitlich überlappen. Durch den Zeitbereich der Überlappung, der steuerbar ist, kann man den Stromanstieg des rückfließenden Stromes und damit die Energierückspeisung steuern. Zu den Kommutierungszeitpunkten, alle 60° el, der Thyristoren 14 des Gleichrichters 4 treten Überspannungen auf. Zur Vermeidung der Überspannungen werden die steuerbaren Stromrichterventile 24 und 26 zur Zwangskommutierung der Thyristoren 14 des Gleichrichters 4 für eine Zeitspanne, die der Freiwerdezeit der Thyristoren 14 entspricht, gesperrt. Somit können die Thyristoren 14 bei einem Stromwert gleich Null kommutieren, ohne daß eine RC-Beschaltung der Thyristoren 14 nötig ist.

Durch die Steuerung der Amplitude der Steuerspannung $U_{St}$, wie in der Figur 2 angedeutet, kann die Pulsbreite der Pulsfolgen $U_{24}$, $U_{24R}$, $U_{26}$, $U_{26R}$, wie in den Figuren 3 bis 6 angedeutet, verändert werden.

Bei diesem Verfahren werden nur die steuerbaren Stromrichterventile 24 und 26 geregelt. Diese Regelung wird nicht nur bei der Energierückspeisung ins Netz angewendet, sondern auch bei der Energieabgabe an eine Last. D.h. mit diesem Verfahren wird nicht nur eine Energierückspeisung ins Netz mit Hilfe der Rückspeiseschaltung 8 ermöglicht, sondern man kann die Zwischenkreisspannung beliebig regeln. Bei der Energierückspeisung ins Netz kann man somit einfach den rückfließenden Strom und damit die Energie regeln. Bei der Energiezuführung an eine Last kann man mit diesem Verfahren die Zwischenkreisspannung selbst bei Netzschwankungen konstant halten, sogar über den sich einstellenden Gleichspannungswert eines gesteuerten Gleichrichters erhöhen.

**Patentansprüche**

1. Verfahren zur Regelung der Zwischenkreisspannung bei einem Spannungszwischenkreisumrichter (2), der aus einem Gleichrichter (4), einem Wechselrichter (34) und einer zwischen einer Glättungsdrossel (6) und einem Glättungskondensator (10) angeordneten Rückspeiseschaltung (8) aufgebaut ist, bei der in jeder Stromschiene des Zwischenkreises eine in Durchlaßrichtung geschaltete Diode (20, 22) vorgesehen ist, wobei jeweils die Kathoden und die Anoden der Dioden (20, 22) mittels steuerbarer Stromrichterventile (24, 26) miteinander verbunden sind, dadurch gekennzeichnet, daß für beide Energierichtungen jedes steuerbare Stromrichterventil (24, 26) der Rückspeiseschaltung (8) mit jeweils einer pulsbreitenmodulierten Pulsfolge ($U_{24}$, $U_{24R}$, $U_{26}$, $U_{26R}$) angesteuert wird.

2. Verfahren nach Anspruch 1, dadurch gekennzeichnet, daß zur Erhöhung der Zwischenkreisspannung die Einschaltzeiten der beiden Pulsfolgen ($U_{24}$, $U_{26}$) für die steuerbaren Stromrichterventile (24, 26) der Rückspeiseschaltung (8) zeitlich so zueinander versetzt sind, daß zwischen den Einschaltzeiten beide steuerbaren Stromrichterventile (24, 26) gesperrt sind, wobei der über die Glättungsdrossel (6) aufgebaute Strom als Ladestrom in den Glättungskondensator (10) fließt.

3. Verfahren nach Anspruch 1 oder 2, dadurch gekennzeichnet, daß der Gleichrichter (4) im ungesteuerten Gleichrichterbetrieb angesteuert wird.

4. Verfahren nach Anspruch 1, dadurch gekennzeichnet, daß zur Energierückspeisung ins Netz die Einschaltzeiten der beiden Pulsfolgen ($U_{24R}$, $U_{26R}$) für die steuerbaren Stromrichterventile (24, 26) der Rückspeiseschaltung (8) zeitlich so zueinander versetzt sind, daß die Einschaltzeiten sich zeitlich überlappen, wodurch der Mittelwert des rückfließenden Stromes geregelt wird.

5. Verfahren nach Anspruch 4, dadurch gekennzeichnet, daß der Steuerwinkel des Gleichrichters (4) während der Energierückspeisung konstant gehalten wird.

6. Verfahren nach Anspruch 4 mit einem mit Thyristoren (14) versehener Gleichrichter (4), dadurch gekennzeichnet, daß zur Zwangskommutierung der Thyristoren (14) des Gleichrichters (4) die steuerbaren Stromrichterventile (24, 26) der Rückspeiseschaltung (8) für eine Zeitspanne, die der Freiwerdezeit der Thyristoren (14) entspricht, gesperrt werden.

7. Vorrichtung zur Durchführung des Verfahrens nach einem der Ansprüche 1 bis 6, dadurch gekennzeichnet, daß einem ersten Summierpunkt (38) der Istwert ($U_{Zi}$) und der Sollwert ($U_{Zs}$) der Zwischenkreisspannung zugeführt ist, dessen Ausgang mit dem Eingang eines Spannungsreglers (40) verbunden ist, wobei an seinem Ausgang ein Stromsollwert ($I_{Zs}$) ansteht und der mit einer Umschaltstufe (42) und einem zweiten Summierpunkt (44) verbunden ist, daß der Stromistwert ($I_{Zi}$) des Zwischenkreises dem zweiten Summierpunkt (44) zugeführt ist und sein Ausgang mit einer Reihenschaltung, bestehend aus einem Stromregler (46) und einem Steuersatz (48) für die steuerbaren Stromrichterventile (24, 26), verbunden ist, und daß der Steuersatz (50) für den Gleichrichter (4) mit der Umschaltstufe (42) und deren einer Ausgang mit dem Steuersatz (48) für die steuerbaren Stromrichterventile (24, 26) verbunden ist.

8. Vorrichtung nach Anspruch 7, dadurch gekennzeichnet, daß die Glättungsdrossel (6) in der Netzzuleitung angeordnet ist.

9. Vorrichtung nach Anspruch 7, dadurch gekennzeichnet, daß in jedem Zwischenkreiszweig eine Glättungsdrossel (6) vorgesehen ist.

**Claims**

1. Process for controlling the voltage of the link of a voltage-link a.c. converter (2), the converter being constructed from a power rectifier (4), a power inverter (34) and an energy recovery circuit (8) arranged between a smoothing reactor (6) and a smoothing capacitor (10), a diode (20, 22) which is connected in the conducting direction being provided in each conductor of the voltage-link a.c. converter (2) in the energy recovery circuit (8), wherein the cathodes and the anodes of the diodes (20, 22) are connected together in each case by means of controllable valves devices (24, 26), characterised in that each controllable valve device (24, 26) of the energy recovery circuit (8) is controlled by means of a respective pulse-width modulated pulse series ($U_{24}$, $U_{24R}$, $U_{26}$, $U_{26R}$) for both power flow directions.

2. Process according to claim 1, characterised in that in order to increase the voltage of the link, the operating times of the two pulse series ($U_{24}$, $U_{26}$) for the controllable valves devices (24, 26) of the energy recovery circuit (8) are staggered chronologically so that both controllable valves devices (24, 26) are closed between the operating times, whereby the current built up over the smoothing reactor (6) flows into the smoothing capacitor (10) as a charging current.

3. Process according to claim 1 or 2, characterised in that the power rectifier (4) is controlled in the uncontrolled operation of the power rectifier.

4. Process according to claim 1, characterised in that in order to feed power back into the mains the operating times of the two pulse series ($U_{24R}$, $U_{26R}$) for the controllable valves devices (24, 26) of the energy recovery circuit (8) are staggered chronologically so that the operating times overlap, controlling the average value of the return current.

5. Process according to claim 4, characterised in that the delay angle of the power rectifier (4) is maintained constant during the power feed-back.

6. Process according to claim 4 with a power rectifier (4) provided with thyristors (14), characterised in that the controllable valves devices (24, 26) of the energy recovery circuit (8) are closed for a length of time which corresponds to the critical hold-off interval of the thyristors (14), for the self-commutation of the thyristors (14) of the power rectifier (4).

7. Device for carrying out the process according to one of claims 1 to 6, characterised in that the actual value ($U_{Zi}$) and the desired value ($U_{Zs}$) of the voltage of the link are conducted to a first summation point (38), whose output is connected with the input of a voltage regulator (40), whereby there is a desired current value ($I_{Zs}$) at the output of the voltage regulator, this output being connected with a change-over stage (42) and a second summation point (44), in that the actual current value ($I_{Zi}$) of the link is conducted to the second summation point (44), and its output is connected with a series connection comprising a current regulator (46) and trigger equipment (48) for the controllable valves devices (24, 26), and in that the trigger equipment (50) for the power rectifier (4) is connected with the change-over stage (42), one output of which is connected with the trigger equipment (48) for the controllable valves devices (24, 26).

8. Device according to claim 7, characterised in that the smoothing reactor (6) is arranged in the mains supply line.

9. Device according to claim 7, characterised in that one smoothing reactor (6) is provided in each branch of the link.

**Revendications**

1. Procédé pour régler la tension d'un circuit intermédiaire dans un convertisseur statique (2) à circuit intermédiaire de tension, qui est constitué par un redresseur (4), un onduleur (34) et un circuit d'alimentation de retour (8) qui est disposé entre une bobine de lissage (6) et un condensateur de lissage (10) et dans lequel il est prévu, dans chaque rail conducteur du circuit intermédiaire une diode (20, 22) branchée dans le sens direct, les cathodes et les anodes des diodes (20, 22) étant reliées respectivement entre elles au moyen de valves commandables (24, 26) de conversion du courant, caractérisé par le fait que pour les deux directions de transmission de l'énergie, chaque valve commandable (24, 26) de conversion du courant du circuit d'alimentation de retour (8) est commandée par une suite respective d'impulsions ($U_{24}$, $U_{24R}$, $U_{26}$, $U_{26R}$) modulée selon une modulation d'impulsions en durée.

2. Procédé suivant la revendication 1, caractérisé par le fait que pour accroître la tension du circuit intermédiaire, les durées d'application des deux suites d'impulsions ($U_{24}$, $U_{26}$) pour les valves commandables (24, 26) de conversion du courant du circuit d'alimentation de retour (8) sont décalées dans le temps les unes par rapport aux autres de telle sorte qu'entre les durées d'application, les deux valves commandables (24, 26) de conversion du courant sont bloquées, auquel cas le courant, qui s'établit dans la bobine de lissage (6), pénètre en tant que courant de charge dans le condensateur de lissage (10).

3. Procédé suivant la revendication 1 ou 2, caractérisé par le fait que le redresseur (4) est réglé dans un fonctionnement de redresseur non commandé.

4. Procédé suivant la revendication 1, caractérisé par le fait que pour le retour d'alimentation en énergie dans le réseau, les durées d'application des deux suites d'impulsions ($U_{24R}$, $U_{26R}$) pour les valves commandables (24, 26) de conversion du courant du circuit d'alimentation de retour (8) sont décalées dans le temps les unes par rapport aux autres de manière à se chevaucher dans le temps, ce qui règle la valeur moyenne du courant de retour.

5. Procédé suivant la revendication 4, caractérisé par le fait que l'angle de commande du redresseur (4) est maintenu constant pendant le retour d'alimentation en énergie.

6. Procédé suivant la revendication 4, comportant un redresseur (4) muni de thyristors (14), caractérisé par le fait que pour la commutation forcée des thyristors (14) du redresseur (4), les valves commandables (24, 26) de conversion du courant du circuit d'alimentation de retour (8) sont bloquées pendant un intervalle de temps qui correspond à la durée de conduction des thyristors (14).

7. Dispositif pour la mise en œuvre du procédé suivant l'une des revendications 1 à 6, caractérisé par le fait que la valeur réelle ($U_{Zi}$) et la valeur de consigne ($U_{Zs}$) de la tension du circuit intermédiaire est envoyée à un premier nœud de sommation (38), dont la sortie est reliée à l'entrée d'un régulateur de tension (40), sur la sortie duquel apparaît une valeur de consigne ($I_{Zs}$) du courant et qui est relié à un étage de commutation (42) et à un second nœud de sommation (44), que la valeur réelle ($I_{Zi}$) du courant du circuit intermédiaire est envoyée au second nœud de sommation (44), dont la sortie est raccordée à un circuit série formé par un régulateur de tension (46) et par une unité de commande (48) prévue pour les valves commandables (24, 26) de conversion du courant, et que l'unité de commande (50) prévue pour le redresseur (4) est reliée à l'étage de commutation (42) et que l'une de ses sorties est reliée à l'unité de commande (48) prévue pour les valves commandables (24, 26) de conversion du courant.

8. Dispositif suivant la revendication 7, caractérisé par le fait que la bobine de lissage (6) est montée dans la ligne d'alimentation reliée au réseau.

9. Dispositif suivant la revendication 7, caractérisée par le fait qu'une bobine de lissage (6) est prévue dans chaque branche du circuit intermédiaire.

FIG 1

FIG 2

FIG 3

FIG 4

FIG 5

FIG 6